# EUROPÄISCHE PATENTANMELDUNG

(11) **EP 0 635 458 A1**
(43) Veröffentlichungstag der Anmeldung: **25.01.1995**
(21) Anmeldenummer: 94110784.9
(22) Anmeldetag: 12.07.1994
(51) Int. Cl.: C02F 1/66, F24H 8/00

(54) **Verfahren zur Reinigung von sauren oder alkalischen Abwässern und flüssigen Roh-Kondensaten, insbesondere der Kondensate aus Rauchgasen der mit fossilen Brennstoffen betriebenen Verbrennungsanlagen**

(30) Priorität: 20.07.1993 DE 4324116
(71) Anmelder: KEMUT R. Keller & Co, CH-8592 Uttwil (CH)
(72) Erfinder: Boguslawski, Zbigniew Dr., D-63263 Neu-Isenburg (DE)
(74) Vertreter: Eyer, Eckhardt Philipp, Dipl.-Ing.

(57) **Zusammenfassung**

Verfahren zur Reinigung von sauren oder alkalischen Abwässern und flüssigen Roh-Kondensaten, insbesondere der Kondensate aus Rauchgasen der mit fossilen Brennstoffen betriebenen Verbrennungsanlagen, von ihren alkalischen sowie Schwermetall- und Eisenverunreinigugen, bei dem das Abwasser bezw. flüssige Rohkondensat mit Hilfe eines ein basisches Reaktionsprodukt und Säure entwickelnden pelletierten Reagenzium behandelt wird, bei dem die Umsetzung mit einem Hydroxykarbonate und/oder Karbonate der Metalle der 2. Hauptgruppe des periodischen Systemes, insbesondere Magnesiumsalze, weiterhin Eisenoxid und/oder Aluminiumoxid enthaltenden homogenen Gemisch erfolgt, von denen die Karbonate der Neutralisation und Abscheidung der im Abwasser bzw. flüssigen Kondensat enthaltenen Schwermetall- und Eisenverunreinigungen in einer ersten Neutralisationsstufe dienen und das Eisen- bzw. Aluminiumoxid in einer zweiten zeitverschobenen Umsetzungsstufe zu Eisen- bzw. Aluminium-Hydroxid umgesetzt wird, das in statu nascendi die Rückneutralisation des Abwassers bzw. des flüssigen Rohkondensats bewirkt.

## Beschreibung

Die Erfindung geht aus von einem Verfahren zur Reinigung von sauren oder alkalischen Abwässern und flüssigen Roh-Kondensaten gemäß dem Oberbegriff des Patentanspruches 1.

Die Reinigung von Abwässern ist nach wie vor ein nur unbefriedigend gelöstes Problem. Dies gilt nicht nur für die in großer Menge in Haushalten und industriellen, kommunalen und landwirtschaftlichen Betrieben anfallenden Abwässer sondern insbesondere auch für die industriellen und häuslichen Rohkondensate, etwa die aus den Rauchgasen der mit fossilen Brennstoffen betriebenen Verbrennungsanlagen abgeschiedenen Kondensate. Hierbei ergeben sich Probleme einerseits deswegen, weil diese Kondendsate aufgrund der Struktur der bestehenden Heizungssysteme in sich zu einer erheblichen Gesamtmenge addierenden geringen Teilmengen anfallen, und andererseits deswegen, weil diese Kondensate neben oft hochkonzentrierten Säure- und Alkali-Verunreinigungen hochtoxische Schwermetall-Verunreinigungen enthalten.

Zur Reinigung der in dieser Weise belasteten Abwässer sind chemische und biologische Verfahren zur Abwasserbehandlung bekannt geworden, die teils auf Flockungswirkungen, teils auf komplizierten thermodynamischen Vorgängen beruhen und sich wegen ihres erheblichen apparativen und verfahrenstechnischen Aufwandes nicht zum direkten Einsatz an der Entstehungsstelle eignen. Ein weiterer wesentlicher Nachteil besteht auch darin, daß diese Verfahren jeweils nur einen Teilaspekt erfassen, d.h. sich jeweils zur Beseitigung nur einer Klasse von Verunreinigungen eignen. Die simultane Beseitigung von sowohl sauren als auch alkalischen Verunreinigungen als auch von Schwermetallen in einem Verfahrenszug ist mit den bekannten Verfahren nicht erreichbar.

Der vorliegenden Erfindung liegt als Aufgabe die Schaffung eines Verfahrens zur Reinigung von sauren oder alkalischen Abwässern und flüssigen Roh-Kondensaten zugrunde, mit dessen Hilfe auf eine einfache Weise sowohl saure als auch alkalische Abwässer von ihren umweltschädlichen Verunreinigungen gereinigt werden können.

Diese Aufgabe wird mit einem Verfahren mit den im Patentanspruch 1 wiedergegebenen Merkmalen gelöst.

Durch die Erfindung ist ein Verfahren geschaffen, mit dessen Hilfe durch gezielte Neutralisierung bzw. je nach Ausgangsbedingungen gegebenenfalls Nachneutralisierung und anschließende Rückneutralisierung und Umsetzung die Schwermetalle sowie anderweitigen Verunreinigungen zu unlöslichen filterbaren Salzen umreagiert und anschließend die resultierende Flüssigkeit auf einen umweltverträglichen pH-Wert gestellt wird, so daß sie unbedenklich in den Vorfluter eingeleitet werden kann. Hierbei werden nicht nur die leichter zu entfernenden schwermetalle beseitigt sondern auch die bisher erhebliche Probleme verursachenden sechswertigen Chrom- sowie die Bleiverunreinigungen.

Weitere Einzelheiten der in den Patentansprüchen gekennzeichneten Erfindung werden nachstehend anhand der beigefügten Zeichnung erläutert. Es zeigen
- Fig. 1: ein Block-Schema des Verfahrens der Erfindung
- Fig. 2: eine Ausführungsform einer Kastenbox zur Durchführung des Verfahrens der Erfindung
- Fig. 3: eine andere Ausführungsform einer Kastenbox zur Durchführung des Verfahrens der Erfindung
- Fig. 4: eine weitere Ausführungsform einer Kastenbox zur Durchführung des Verfahrens der Erfindung
- Fig. 5: eine Rinnenbox zur Durchführung des Verfahrens der Erfindung
- Fig. 6: eine Röhrenbox zur Durchführung des Verfahrens der Erfindung

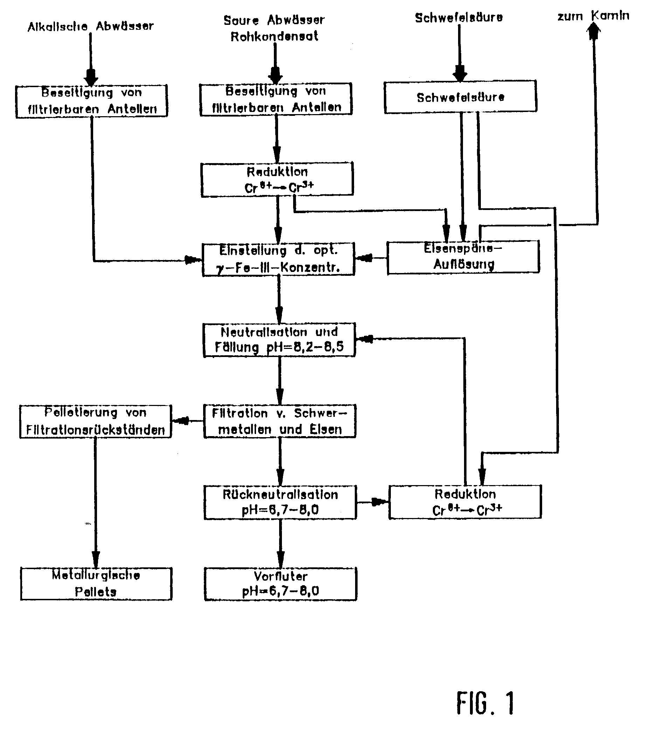

Fig. 1 der Zeichnung gibt in Form eines Blockschemas den Ablauf des Verfahrens der Erfindung wieder, in dessen Verlauf zunächst nach der "Beseitigung von filterbaren Anteilen" die "Reduktion" (der Schwermetalle aus sauren Abwässern) erfolgt, die der Einfachheit halber lediglich am Beispiel des Chromumsatzes erläutert wird, das mittels schwefliger Säure von der sechswertigen Modifikation zu dreiwertigem Chrom reduziert wird, in welcher Form es zunächst ein wasserlösliches Reaktionsprodukt nach den Gleichungen

2 CrO₃ + 3 SO₂ ------- Cr₂(SO₄)₃ (1)

2 CrO₃ + 3 NaIISO₃ + 2 H₂SO₄ ---- Cr₂(SO₄)₃ + NaHSO₄ + 3H₂O (2)

sowie durch alkalische Zusätze wasserunlösliches Hydroxid bildet. Erfindungsgemäß wird - falls sechswertiges Chrom auftritt - zu diesem Zweck am Einlauf des Abwassers bzw. Roh-Kondensats ein Aktivsatz von pelletiertem Natriumslufit einmontiert, während das erforderliche Schwefeldioxid bzw. die Schwefelsäure normalerweise originär im Abwasser bzw. Roh-Kondesat auftreten. Andernfalls, also etwa bei Kondensaten aus der Erdgasverbrennung, muß Schwefelsäure aus einer Fremdquelle gezielt zugeführt werden. Wie aus der Gleichung (2) hervorgeht, wird bei der Reaktion die Schwefelsäure verbraucht. Aus diesem Grund muß in dem Reaktionssystem in jedem Falle der minimale pH-Wert von 2,5 aufrecht erhalten werden, da die Reduktion um so schneller erfolgt, je niedriger der pH-Wert ist.

Zum Zwecke der Umsetzung der gelösten Schwermetalle erfolgt zunächst die "Einstellung d. opt. gamma-Fe-III-Konzentr." durch Bildung von Eisen- bzw. Aluminium-Hydroxid, mit deren Hilfe in statu nascendi das gelöste Schwermetallsalz in das - unter den geltenden sauren Bedingungen ebenfalls lösliches - Hydroxid umgesetzt wird. Quelle für die Eisen- bzw. Aluminium-Hydroxid-Bildung sind die in dem eingesetzten Reagenzium Eisen- bzw. Aluminiumbestandteile, die gegebenenfalls lediglich die für die Umsetzung erforderliche Grundmenge bilden und für den Fall, daß in dem vorgelegten Abwasser höhere Anteile an Schwermetallen enthalten sind, zur Beschleunigung der Umsetzung zweckmäßig durch zusätzliches Eisenmaterial ergänzt werden. In diesen Fällen wird von dem Abwasser bzw. Kondensat aus der "Reduktions"-Stufe eine bis zu etwa 25 % der Gesamtmenge betragende Teilmenge abgezweigt und in eine Stufe "Eisenspäne-Auflösung" überführt, in der sie mit einer auf die Gesamtmenge berechneten Menge an Eisenspänen sowie der zu ihrer Auflösung erforderlichen Menge an 30 - 35 %-iger Schwefelsäure versetzt und in die Einstellungs-Stufe zurückgeführt wird. Der Gesamtstrom sollte bis auf 80 bis 120 mg/l Eisen-III-Ionen-Konzentration eingestellt werden, wobei unter dem Saugzug eines Kamins ein Luftstrom durch die Reaktionszone gesaugt wird, der den sich bei der Auflösung des Eisens entwickelnden Wasserstoff in die Atmosphäre abführt.

Nach vollständiger Umsetzung der Schwermetalle zu Hydroxid erfolgt die Überführung der Lösung in die Stufe "Neutralisation und Fällung; pH = 8,2 - 8,5". In dieser Stufe wird das Abwasser bzw. Rohkondensat über ein Aktivbett von Magnesium-Hydroxid-Karbonat enthaltenden Aktiv-Pellets geleitet und erreicht hierbei Anfangs-pH-Werte von ca. 9,0 bis 9,5, bei denen die Schwermetalle ausfallen und das gebildete Eisen-III-Hydroxid in statu nasceudi als Flockungsmittel wirkt und die feinst ausgefallenen Schwermetall-/Eisen-Hydroxide bzw. -Sulfide absorbiert. Gleichzeitig wird durch Abscheidung von Wasserstoff-Ionen H⁺ der pH-Wert an der Filtrationsstufe auf den pH-Wert auf etwa 8,2 bis 8,5 abgesenkt. Das Verfahren macht sich demgemäß insgesamt den Umstand zunutze, daß die Schwermetall-Hydroxide einschließlich der schwer trennbaren Chrom- und Blei-Hydroxide in saurem Medium leicht löslich in alkalischem Medium jedoch unlöslich sind, das gebildete Schwermetall-Hydroxid aus der Lösung ausgefällt, wobei in dem angegebenen pH-Bereich die optimalen Ergebnisse erzielt werden. Die danach in der Stufe "Filtration v. Schwermetallen und Eisen" an Preßwatte abgeschiedenen festen Rückstände können direkt oder nach Pelletierung in die üblichen metallurgischen Verhüttungs- oder Raffinations-Prozesse überführt werden. Die Standzeit der Filterpackungen richtet sich im wesentlichen nach der Konzentration der im Abwasser/Rohkondensat vorhandenen Schadstoffe.

Nach der Filtration wird das gereinigte Abwasser/Reinkondensat in der Stufe "Rüchneutralisation; pH = 6,7 -. 8,0" durch weitere Schichten von Aktivpelletes geleitet, wobei durch die sich aus der fortschreitenden Hydration/Hydrolyse bildenden Wasserstoff-Ionen H⁺ der pH-Wert, je nach der lokalen Vorschrift auf auf einen Wert zwischen 6,7 bis 8,0 eingestellt wird. Das in diesem Stadium auftretende Eisen-III-Hydroxid wird vor dem Abfluß in den Vorfluter abgefiltert, wobei bei pH-Werten unter 7,0 die Auflösung des Hydroxids eintritt.

Falls das Abwasser alkalisch wirkt, wird es zum Zwecke einer weiteren Nach-Neutralisation, d.h. quantitativen Ausfällung von Schwermetallen und Eisen, in die Prozeßstufe "Einstellung d. opt. gamma-Eisen-III-Konzentr." zurückgeführt.

Nach der Rückneutralisation ergibt sich ein Abwasserstrom mit niedrigen pH-Wert, der je nach Arbeitskonzentration von Fe-III-Hydroxo-Ionen zwischen 2 und 3 liegen kann. Das Abwasser wird wiederum einem Reduktionsvorgang zur Reduzierung von sechswertigen Chromationen Cr⁶⁺ zu dreiwertigen Chromionen Cr³⁺ ausgesetzt (s.o.) und in die Neutralisationsstufe zwecks Ausscheidung von Chrom-III-Hydroxid zurückgeführt.

Die hydraulische Leistung von in der o/b Verfahrensweise eingesetzten Aktiv-Pellets betragen, gemittelt, ca 5000 bis 6500 Liter Abwasser, Ausgangs-pH-Wert 0 pro Liter Aktivpellets. Diese hydraulische Leistung betrifft sowohl die Neutralisationspellets auf Magnesiumbasis als auch die Natriumbisulfitpellets.

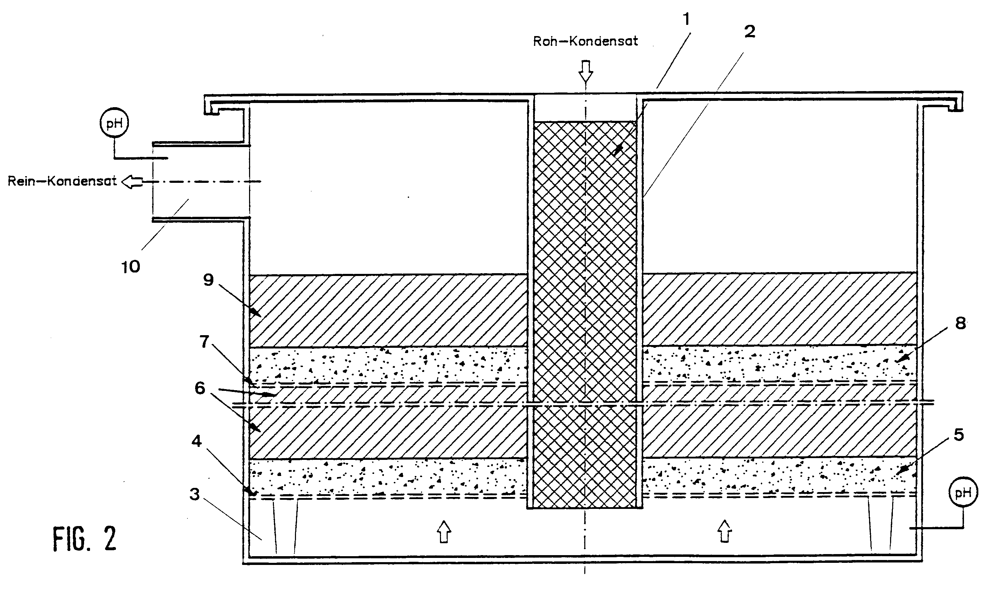

Die in Fig. 2 wiedergegebene die Form einer Kastenbox aufweisende Vorrichtung zur Durchführung des erfindungsgemäßen Verfahrens besteht aus einem Filterwatte 1 zur Ausfilterung der festen Bestandteile aus dem Abwasser bzw. Rohkondensat enthaltenden, in den Sammelraum 3 führenden Einlaufschacht 2. Das auf diese Weise von seinen festen Verunreinigungen befreite Abwasser bzw. Rohkondensat steigt nunmehr durch die der Stützung des darüberliegenden Reagenz-Materials dienende Lochplatte 4 sowie Filter-Preßwatte-Schicht 5 in die Aktiv-Pellets enthaltende Kammer 6 auf, in der die Schwermetall-Hydroxide bzw. -Sulfide bei einem pH-Wert von 8,2 bis 8,5 ausfallen und an der darüber angeordneten, durch eine weitere Lochplatte 7 gehaltenen Filtermatte 8 abgeschieden werden. In der darüberliegenden Aktiv-Pelletschicht 9 wird das gereinigte Abwasser auf den pH-Wert von 6,7 bis 8,0 rückneutralisiert und über den Auslaß 10 in die Kanalisation abgeführt. Diese Ausführungsform einer erfindungsgemäßen Box eignet sich insbesondere zur Reinigung der Kondensate aus Klein-Verbrennungsanlagen, etwaq Haushalts-Heizungsanlagen.

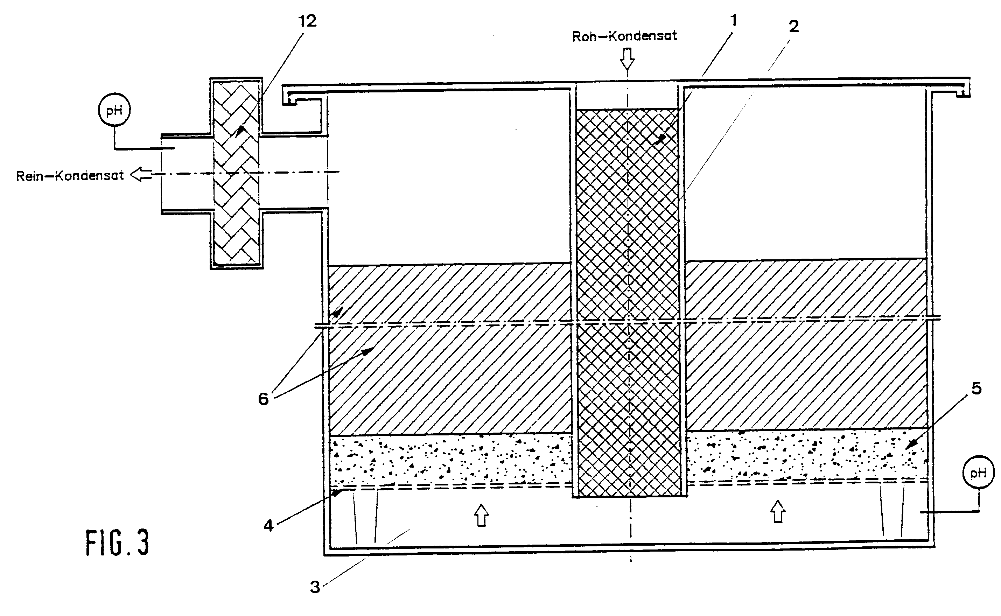

Das gleiche gilt für die gegenüber der Ausführungsform der Fig. 2 vereinfachte Ausführungsform gemäß Fig. 3, in der die entsprechenden Teile mit denselben Bezugsziffern wie in Fig. 2 bezeichnet sind. Sie unterscheidet sich von der Ausführungsform der Fig. 2 nur dadurch, daß die Umsetzung lediglich in einer Aktivschicht und die Filtrierung in einer außerhalb der Box angeordneten Filterschicht 12 erfolgt.

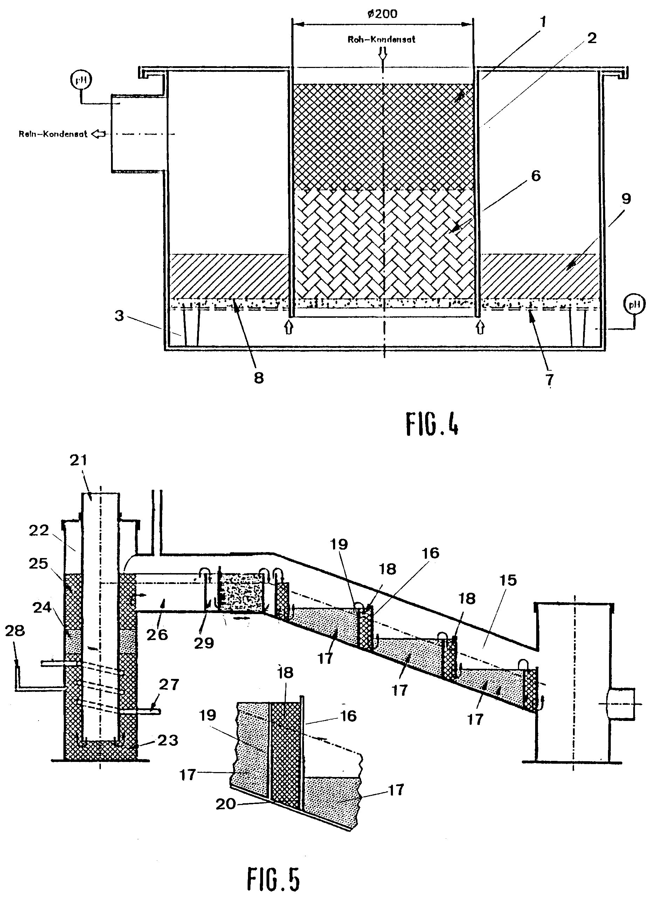

Entsprechendes gilt für die in Fig. 4 wiedergegebene Ausführungsform, die sich der Ausführungsform nach Fig. 2 dadurch unterscheidet, daß die erste Aktivschicht 6 sowie die nachfolgende Filterschicht unterhalb der Filterschicht 1 im Zuführungsschacht 2 angeordnet sind. Der Aufbau der Box ist hierdurch weiterhin vereinfacht.

Eine besonders vorteilhafte, sich insbesondere für Großanlagen eignende Ausführungsform einer Vorrichtung zur Durchführung des erfindungsgemäßen Vefahrens stellt die in Fig. 5 wiedergegebene Rinnenbox dar, in der das zu reinigende Material aufgrund eigener Schwerkraft, d.h. ohne Pumpenkraft-Unterstützung durch die einzelnen Stufen geführt werden kann. Sie besteht aus einer geschlossenen, gegen die Horizontale geneigeten Rinne 15, in der durch Querwände bzw. Schotten 16, 19 paarweise mehrere, abwechselnd Aktivmaterial enthaltende Kammern 17 und Filtermaterial enthaltende Kammern 18 abgeteilt sind, die von dem Abwasser bzw. flüssigen Kondensaat aufgrund ihrer Schwerkraft durchströmt werden. Hierbei sind die talwärts gelegenen Schotten 19 der das das Aktivmaterial enthaltenden Kammern 17 geschlossen und bilden damit gegenüber dem nachfolgenden, das Filtermaterial enthaltenden Kammern 18 einen Überlauf bilden, während die talwärts gelegenen Schotten 16 der das Filtermaterial enthaltenden Kammern 18 an ihren bodenseitigen Enden Durchflußöffnungen 20 aufweisen, so daß die Filterräume jeweils einen Durchflußkanal bilden, der bergwärts am Boden der jeweils nachfolgenden Reaktionskammer mündet.

Der Rinne vorgeschaltet ist ein Zulaufturm aus einem Einlaufrohr 21 und einem dieses umgebenden, mit der Rimme verbundenen Ringraum 22, in dem zwischen zwei Filterschichten 23, 25 eine der Reduktion der Chromverunreinigungen dienende Aktivschicht 24 angeordnet ist. Zwischen dem Zulaufturm und der Rinne ist ein Stauraum 26 vorgesehen. Weiterhin ist das Einlaufrohr 21 mit einer Kühleinrichtung 27 versehen, mit deren Hilfe das zugeführte Abwasser bzw. Kondensat auf die Arbeitstemperatur gekühlt werden kann. Über den Anschluß 28 kann Schwefelsäure in den Kondensatstrom eingegeben werden.

Die Rinnenbox besteht aus einem säure- und basefesten Kunststoff. Das Rohkondensat wird über das Einlaufrohr 21 zugeführt und mittels Wasser über eine Kühlschlange 27 auf eine Temperatur von ca. 20° C gebracht. Nun wird das Kondensat über eine Filterwatte 23 geleitet, die es von groben Verunreinigungen befreit. In der nachfolgenden Aktivschicht 24 erfolgt die Entchromung des Kondensats. Da hierzu ein sehr saures Kondensat benötigt wird, kann im Bedarfsfalle über den Anschluß 28 eine geringe Menge von Säure in das Kondensat eingespeist werden, das den pH-Wert auf etwa 1 - 1,5 bringt. Das ausgefällte Chrom wird im Filter 25 abgeschieden.

Das Kondensat wird nun in der Stauzone 26 gesammelt und über den Vorfluter 29 in die Rinne 15 geleitet, wobei bedarfsweise eine Teilmenge zum Zwecke der der Anreicherung mit Eisen (Fe) über die Kammer 30 geleitet wird. Die übrige Menge gelangt auf einem anderen, nicht dargestellten Wege in die Rinne 15, in deren drei Stufen die Umsetzung der Schadstoffe und deren Ausfilterung in der anhand Fig. 1 beschriebenen erfolgt.

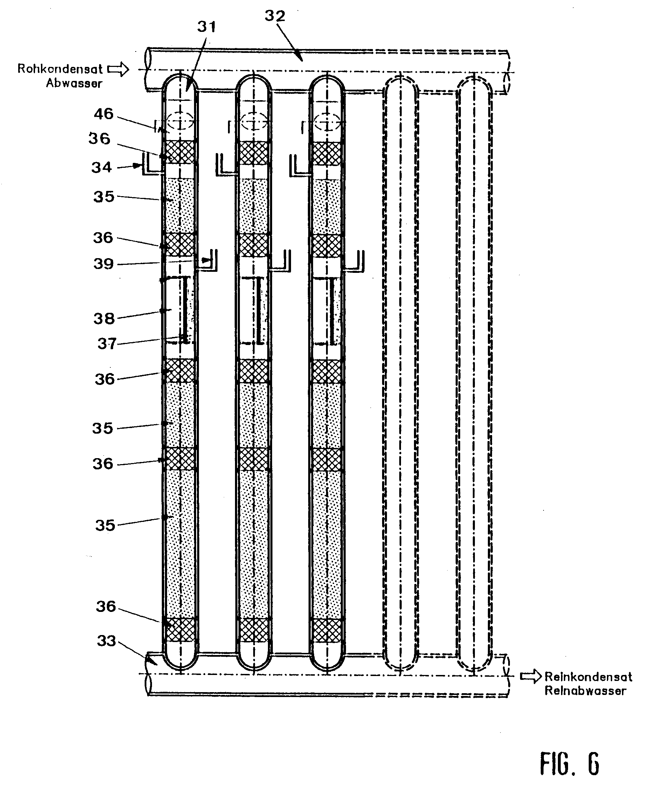

Die in Fig. 6 wiedergegebene, als Röhrenabsorber ausgebildete Ausführungsform einer erfindungsgemäßen Vorrichtung besteht aus einer beliebigen Anzahl von nach Art eines Registers hintereinander und nebeneinander angeordneten Rohrlingen 31, die mittels eines Eingangsverteilers 32 und eines Ausgangssammlers 33 miteinander verbunden und mit einer ebenfalls beliebigen Zahl von seitlichen Einlässen 34 zur Zuführung von Rektionsmaterialien versehen sind und in denen abwechselnd in der erforderlichen Zahl und Dicke abwechselnd die Reaktionsmaterialien 35 und Filtermaterialien 36 aufgeschichtet sind. Mit 37 ist die Eisenkammer zur Durchleitung der Teilmenge und mit 38 die Leerkammer zur Durchleitung der Restmenge bezeichnet. über den Auslaß 39 kann der bei der Eisenumsetzung gebildete Wasserstoff abgeleitet werden.

Die Rohrlinge sind so ausgeführt, daß sie jederzeit ohne Demontage der Anschlüsse geöffnet werden können. Alle Reinigungsstufen sind in Segmentbauweise gefertigt und werden mittels Schnappverschlüssen verbunden. Alle Pellets- und Filterkammern sind in ihrer Größe variabel, da die einzelnen Segmente in verschiedenen, den jeweiligen Anforderungen entsprechenden Längen hergestellt werden können. Dadurch können einzelne Bereiche vergrößert oder verkleinert bzw. entfernt werden. Es können beliebig viele Standrohre an die Verteiler angeschlossen werden. Damit die Anlage zum Warten nicht außer Betrieb genommen werden muß, kann jeder Rohrling für sich über eine Absperrklappe 40 verschlossen werden.

Das gereinigte und neutralisierte Kondensat wird über den Sammler 33 in die Kanalisation geleitet.

## Patentansprüche

1. Verfahren zur Reinigung von sauren oder alkalischen Abwässern und flüssigen Roh-Kondensaten, insbesondere der Kondensate aus Rauchgasen der mit fossilen Brennstoffen betriebenen Verbrennungsanlagen, von ihren alkalischen sowie Schwermetall- und Eisenverunreinigugen, bei dem das Abwasser bezw. flüssige Rohkondensat mit Hilfe eines ein basisches Reaktionsprodukt und Säure entwickelnden pelletierten Reagenzium behandelt wird, dadurch gekennzeichnet, daß die Umsetzung mit einem Hydroxykarbonate und/oder Karbonate der Metalle der 2. Hauptgruppe des periodischen Systemes, insbesondere Magnesiumsalze, weiterhin Eisenoxid und/oder Aluminiumoxid enthaltenden homogenen Gemisch erfolgt, von denen die Karbonate der Neutralisation und Abscheidung der im Abwasser bzw. flüssigen Kondensat enthaltenen Schwermetall- und Eisenverunreinigungen in einer ersten Neutralisationsstufe dienen und das Eisen- bzw. Aluminiumoxid in einer zweiten zeitverschobenen Umsetzungsstufe zu Eisen- bzw. AluminiumHydroxid umgesetzt wird, das in statu nascendi die Rückneutralisation des Abwassers bzw. des flüssigen Rohkondensats bewirkt.

2. Verfahren nach Anspruch 1, dadurch gekennzeichnet, daß der Eisenmetallanteil im Reagenzium 5 bis 12 Gew.-%, bezogen auf seinen Feststoffanteil, beträgt.

3. Verfahren nach Anspruch 1 oder 2, dadurch gekennzeichnet, daß als Eisenverbindung in verdünnter Säure lösliches Eisen-III-Oxid Verwendung findet.

4. Verfahren nach einem der Ansprüche 1 bis 3, dadurch gekennzeichnet, daß das Reagenzium als Magnesiumverbindung Magnesium-Hydroxid-Karbonat in einer Menge bis maximal 30 Gew.-%, vorteilhaft 20 bis 25 Gew.-%, bezogen auf den Feststoff-Anteil des pelletierten Reagenziums, enthält, das in der Neutralisationsstufe Kohlenoxid abgibt und dadurch die gleichbleibend homogene Durchmischung des Abwassers bzw. des flüssigen Kondensats bewirkt.

5. Verfahren nach einem der Ansprüche 1 bis 4, dadurch gekennzeichnet, daß die Umsetzuung mit Hilfe eines Eisen-III-Salz, beispielsweise Eisen-III-Sulfat, enthaltenden pelletierten Reagenziums erfolgt.

6. Verfahren nach einem der Ansprüche 1 bis 5, dadurch gekennzeichnet, daß das pelletierte Reaktionsmaterial bis zu 5 Gew.-%, bezogen auf den Feststoffgehalt, Aluminium-III-Oxid (Al₂O₃) enthält, bei dessen Herstellung eine Arbeitstemperatur von 400⁰ C zu keinem Zeitpunkt überschritten worden war.

7. Verfahren nach einem der Ansprüche 1 und 6, dadurch gekennzeichnet, daß das pelletierte Reaktionsmaterial 2 bis 5 Gew.-% Eisensulfit (FeS₂), bezogen auf den Feststoffgehalt, enthält.

8. Verfahren nach einem der Ansprüche 1 bis 7, dadurch gekenzeichnet, daß vor der Umsetzung der zweiten Stufe ein Teil des sauren Abwassers bezw. flüssigen Rohkondensats abgezweigt und unter Berücksichtigung der qualitativen und quantitativen Zusammensetzung der Bestandteile, insbesondere der in der zweiten Umsetzungsstufe als Reagenzium einsetzbaren Eisenbestandteile, als Steuerflüssigkeit vorbehandelt und danach wieder mit der Hauptmenge zusammengeführt wird.

9. Verfahren nach Anspruch 8, dadurch gekennzeichnet, daß der Steuerflüssigkeit miniaturisierte Eisenbestandteile, beispielsweise Hebelspäne oder anderweitige Eisenabfälle sowie gegebenenfalls die zur Umsetzung erforderliche Säure zugesetzt und das Abwasser bzw. flüssige Rohkondensat nach der Rückführung der Steuerflüssigkeit intensiv belüftet wird.

10. Verfahren nach einem der Ansprüche 1 bis 9, dadurch gekennzeichnet, daß die Eisen-III-Konzentration im Abwasser bzw. Roh-Kondensat bei Eintritt in die zweite Umsetzungsstufe 80 bis 120 mg pro Liter beträgt.

11. Verfahren nach einem der Ansprüche 1 bis 10, dadurch gekennzeichnet, daß das Kornsprektrum des pelletierten Reagenziums 0,2 bis 3.0 mm und der Füllungsgrad der gerüttelten Mischung 0,6 betragen.

12. Verfahren nach einem der Ansprüche 1 bis 11, dadurch gekennzeichnet, daß der pH-Wert in der 1. Umsetzungsstufe bis zur ersten Abfiltrierung der gebildeten Schwermetall- und Eisen-Hydroxide auf 8,2 bis 8,5 eingestellt und gehalten und nach Erreichen eines pH-Wertes von unter 7,0 in einer 2. Phase eine zweite Filtration von Schwermetall- und Eisen-Hydroxiden stattfindet.

13. Verfahren nach Anspruch 1, dadurch gekennzeichnet, daß im Falle der Anwesenheit von Chrom-Verunreinigungen im Abwasser bzw. flüssigen Kondensat der Neutralisationsstufe eine die Chrombestandteile in dreiwertige Chromverbindungen reduzierende Reaktionsstufe vorgeschaltet ist.

14. Verfahren nach Anspruch 13, dadurch gekennzeichnet, daß die Reduktion mit Hilfe von Natriumsulfit enthaltendem pelletiertem Reaktionsmaterial bei einem mittels Schwefelsäure auf einen Wert von mindestens 2,5 eingestellten pH-WErt erfolgt.

15. Verfahren nach einem der Ansprüche 1 bis 14, dadurch gekennzeichnet, daß das Abwasser bzw. flüssige Roh-Kondensat zur Reduzierung der Versalzung des gereinigten Abwasserstromes vor der Neutralisationuf eine Arbeitstemperatur von ca. 20 bis 25⁰ C gekühlt wird.

16. Verfahren nach einem der Ansprüche 1 bis 15 zur Aufarbeitung von alkalischen Abwässern, dadurch gekennzeichnet, daß das zu behandelnde alkalische Abwasser in die Prozeßstufe der Einstellung der optimalen gamma-Eisen-III-Konzentration eingeführt wird und dann in den Vorfluter abgelassen wird.

17. Verfahren nach einem der Ansprüche 6 bis 16, geeignet für die chromathaltige Verunreinigungen enthaltenden alkalischen Abwässer, dadurch gekennzeichnet, daß die aufgearbeiteten Abwässer nach der Rück-Neutralisations-Stufe durch Zufuhr von Schwefelsäure aus fremder Quelle, einem Reduktionsvorgang unterworfen werden, worauf sie wieder in die Einstellungs-Stufe zwecks Niederschlagung von Chrom-III-Oxid hineingeführt werden.

18. Vorrichtung zur Durchführung des Verfahrens nach einem der Ansprüche 1 bis 17, gekennzeichnet durch einen geschlossenen Behälter mit einem Einlaufkanal (2, 21) und einer beliebigen Anzahl von paarweise abwechsend hintereinandergeschalteter, durch Querwände bzw. Schotten (4, 7, 16, 19) geteilten Reaktions- und Filterkammern (1, 5, 6, 8,9; 17, 18), durch die das Abw0sser bzw. flüssige Kondensat geführt wird.

19. Vorrichtung nach Anspruch 18, dadurch gekennzeichnet, daß die Querwände die Form von das Filtermaterial (5, 8) und das Aktivmaterial (6, 9) tragenden Lochblechen (4, 7) aufweisen.

20. Vorrichtung nach Anspruch 18, daß der Behälter die Form einer geschlossenen, gegen die Horizontale geneigeten Rinne aufweist, in der durch Querwände bzw. Schotten (16, 19) abwechselnd paarweise mehrere das Aktivmaterial enthaltende Reaktionskammern (17) und Filtermaterial enthaltende Filterkammern (18) abgeteilt sind, die von dem Abwasser bzw. flüssigen Kondensat aufgrund ihrer Schwerkraft durchströmt werden, wobei die talwärts gelegenen Schotten (19) der das Aktivmaterial enthaltenden Kammern (17) geschlossen sind und damit gegenüber der nachfolgenden Filterkammer (18) einen Überlauf bildet, während die talwärts gelegenen Schotter, (16) der Filterkammern (18) an ihren bodenseitigen Enden Durchflußöffnungen (20) aufweisen, so daß die Filterkammern (18) jeweils einen Durchflußkanal bilden, der bergwärts am Boden des jeweils nachfolgenden Reaktionskammer (17) mündet.

21. Vorrichtung nach einem der Anspruch 18 bis 20, dadurch gekennzeichnet, daß die Reaktionskammern bezw. -Räume in zwei Arbeitszonen unterteilt sind, von denen die Reaktionskammern bezw. -becken der ersten (oberen) Arbeitszone der Neutralisation von Säure- bzw. von Alkali-Anteilen mit Ausscheidung von Schwermetall- und Eisen-Hyxdroxiden oder aber -Sulfiden und deren nachfolgender Filtration sowie die Reaktionskammern bzw. -becken der zweiten Zone der Rück-Neutralisation der Alkali-Anteile und der nachträglichen Filtration restlicher Schwermetall- und Eisen-Sulfide dienen.

22. Vorrichtung nach einem der Anspruch 20, dadurch gekennzeichnet, daß der Rinne (15) ein Zulaufturm aus einem Einlaufrohr (21) und einem dieses umgebenden, mit der Rimme verbundenen Ringraum (22) vorgeschaltet ist, in dem zwischen zwei Filterschichten (23, 25) eine der Reduktion der Chromverunreinigungen dienende Aktivschicht (24) angeordnet ist.

23. Vorrichtung nach einem der Anspruch 20 oder 22, dadurch gekennzeichnet, daß das Einlaufrohr (21) mit einer Kühleinrichtung (27) versehen ist, mit deren Hilfe das zugeführte Abwasser bzw. Kondensat auf die Arbeitstemperatur gekühlt werden kann.

24. Vorrichtung zur Durchführung des Verfahrens nach den einem der Ansprüche 18 bis 23, gekennzeichnet dadurch, daß in dem Aktivpellets-Haufwerk eine zusätzliche Lochplatte (2) mit Filter (3) zur Filtration von Schwermetall-Hydroxiden/-Sulfiden bei pH-Werten 8,2 bis 8,5 montiert werden.

25. Vorrichtung zur Durchführung des Verfahrens nach den einem der Ansprüche 18, 20 und 21, dadurch gekennzeichnet, daß der Filtrationsvorgang außerhalb des Neutralisationskastens (5) durchgeführt wird.

26. Vorrichtung zur Durchführung des Verfahrens nach einem der Ansprüche 1 bis 17, bestehend aus einer beliebigen Anzahl von nach Art eines Registers hintereinander und nebeneinander angeordneten Rohrlingen (31), die mittels eines Eingangsverteilers (32) und eines Ausgangssammlers (33) miteinander verbunden und mit einer ebenfalls beliebigen Zahl von seitlichen Einlässen (34) zur Zuführung von Rektionsmaterialien versehen sind und in denen abwechselnd in der erforderlichen Zahl und Dicke abwechselnd die Reaktionsmaterialien und Filtermaterialien aufgeschichtet sind.

27. Vorrichtung nach Anspruch 26, dadurch gekennzeichnet, daß die Rohre aus einzelnen, mittels lösbarer Verbindungen zusammengefügter Segmente gebildet sind, die jede eine Reaktionsstufe und/oder Filterstufe bilden und einzeln ausgetauscht werden werden können.

28. Verfahren nach einem der Ansprüche 1 bis 27, dadurch gekennzeichnet, daß die gesättigten Filtrations-Preßwatte-Einsätze, enthaltend die Niederschläge von Schwermetall-/Eisen-Hydroxiden/Sulfiden, zwecks einer Nutz-Entsorgung zu verhüttbaren Pellets aufgearbeitet werden.
